# FASCICULE DE BREVET EUROPEEN

(11) **EP 0 896 696 B1**
(45) Date de publication et mention de la délivrance du brevet: **08.01.2003**
(21) Numéro de dépôt: 97920800.6
(22) Date de dépôt: 22.04.1997
(51) Int. Cl.: G05D 1/00, G06F 3/033, G08G 5/00

(54) **PROCEDE ET DISPOSITIF D'ENTREE ET DE CONTROLE DE DONNEES DE VOL**
VEFAHREN UND VORRICHTUNG ZUR EINGABE UND ÜBERTRAGUNG VON FLUGDATEN
METHOD AND DEVICE FOR INPUTTING AND CONTROLLING FLIGHT DATA

(30) Priorité: 30.04.1996 FR 9605426
(43) Date de publication de la demande: 17.02.1999
(73) Titulaire: THALES AVIONICS S.A., 78141 Vélizy Villacoublay Cédex (FR)
(72) Inventeur: BOMANS, Muriel, Thomson-CSF S.C.P.I., F-94117 Arcueil Cedex (FR); GRAND-PERRET, Sylvie, Thomson-CSF S.C.P.I., F-94117 Arcueil Cedex (FR)
(74) Mandataire: Guérin, Michel
(86) Numéro de dépôt international: FR9700718
(87) Numéro de publication internationale: WO97041495

(56) Documents cités:
- EP-A- 0 580 474
- EP-A- 0 606 788
- US-A- 5 454 074

## Description

L'invention concerne les procédés et les dispositifs d'assistance à la navigation aérienne.

D'une façon générale, on sait que dans les aérodynes (avions, hélicoptères, etc.) de conception moderne, le pilote doit dialoguer avec un système de gestion de vol (en anglais "Flight Management System") qui est un calculateur embarqué dans l'aérodyne (dans la suite on parlera d'avion) pour assister le pilote dans un certain nombre d'opérations. Ces opérations sont principalement des opérations de définition de plan de vol avant le décollage, des opérations de pilotage (manuel ou automatique) pendant le décollage et l'atterrissage, des opérations de navigation aérienne (calculs de trajectoires, etc.), des opérations de contrôle systématique, en croisière ou au moment de l'approche d'un aéroport.

Le système de gestion de vol fonctionne à partir de données introduites par le pilote, de données fournies par des capteurs répartis dans l'avion, et éventuellement de données numériques transmises par voie hertzienne depuis le sol ou depuis d'autres avions ou même des satellites (système "DATALINK" en voie de généralisation).
Le dialogue entre l'équipe de pilotage et le système de gestion de vol se fait principalement par le moyen d'au moins trois interfaces qui sont :
- un écran de navigation ("Navigation Display") sur lequel est représenté le tracé de la route désirée pour l'avion, c'est-à-dire une représentation graphique du plan de vol de l'avion et la situation de l'avion sur ce plan;
- un écran primaire de pilotage ("Primary Flight Display") qui affiche un horizon artificiel qui s'incline lorsque l'avion s'incline, une indication d'assiette longitudinale de l'avion, et d'autres indications utiles au pilotage, en particulier le mode de guidage de l'avion;
- une boîte de commande de vol ("Flight Control Unit") ayant des commandes manuelles pour sélectionner des consignes telles que le cap désiré pour l'avion;
- et enfin une console clavier-écran, appelée MCDU ("Multipurpose Control Display Unit") qui est une console d'affichage et d'entrées de données permettant à l'équipe de pilotage d'introduire des données dans le système de gestion de vol et de lire des informations communiquées par le système de gestion de vol en fonction des données introduites.

La console d'affichage et d'entrées de données possède d'une part un écran, d'autre part des touches de fonction et enfin un clavier alphanumérique.

Comme on le sait, les opérations à effectuer par l'équipe de pilotage (un pilote ou deux pilotes) pendant les différentes phases du vol sont nombreuses; elles doivent être exécutées d'une manière systématique, de manière que le système de gestion de vol dispose de toutes les données de planification de vol et de contrôle qui sont nécessaires.

En particulier, une série d'opérations de contrôle et d'entrées de données doivent être effectuées par l'équipe de pilotage pendant la phase de préparation de vol ("Preflight"), et avant la phase d'approche ("Approach"). D'autres opérations encore doivent être effectuées en vol ("En-route").

Le pilote qui effectue les opérations doit prendre garde que toutes les opérations prévues dans la procédure soient bien exécutées. Et dans le cas d'un pilotage à deux, ces opérations doivent être partagées avec le pilote adjoint et les opérations effectuées par l'un des pilotes doivent être vérifiées par l'autre. La communication entre les deux pilotes est orale, le cockpit de pilotage comportant deux postes de pilotage identiques côte à côte avec dans chaque poste des interfaces identiques avec le système de gestion de vol qui est unique (ou double avec un système de synchronisation).

Un but de l'invention est de proposer un procédé et un dispositif d'aide à la navigation aérienne qui facilitent pour le pilote l'exécution des tâches qui lui incombent en relation avec le système de gestion de vol pendant les différentes phases d'un vol. Le document US-A-5 454 074 décrit un système d'entrée et de contrôle de données.

Le procédé qui utilise le système de gestion de vol et sa console d'affichage et d'entrées de données est décrit dans la revendication 1.

Dans le cas où deux postes de pilotage sont prévus, avec deux consoles d'affichage et d'entrée de données communiquant avec un même système de gestion de vol, on prévoit de préférence qu'à chaque zone principale est associée une autre zone principale correspondant à la même étape de procédure, l'une des zones étant située à droite et l'autre à gauche de l'écran. Une validation de procédure effectuée à partir du poste de pilotage de gauche fait apparaître dans une couleur différente la zone de gauche, sur les deux consoles, alors qu'une validation effectuée à partir du poste de pilotage de droite fait apparaître dans une couleur différente, sur les deux consoles, la zone de droite. De cette manière il est facile de voir à l'écran d'une part si toutes les étapes de procédure ont été exécutées, d'autre part qui a effectué chacune d'elles.

Dans ce cas de double zone pour chaque opération de procédure, on peut prévoir soit que deux zones séparées, côte-à-côte, sont prévues, avec des indications écrites répétées dans les deux zones, soit qu'une seule double-zone est prévue, divisée en deux, avec un seule indication écrite s'étendant sur les deux parties de la double-zone. La moitié de la zone change alors de couleur en fonction de la console à partir de laquelle a été faite la validation.

L'invention concerne non seulement le procédé qui vient d'être donné en résumé, mais aussi un dispositif d'aide à la navigation aérienne.

Le dispositif selon l'invention est décrit dans la revendication 2.

Parmi les avantages de l'invention on peut citer notamment le fait que le système est résistant aux interruptions : les pilotes sont fréquemment interrompus dans leurs séquences d'action, tout particulièrement dans la phase de préparation du vol. Avec l'invention, ils disposent d'un résumé des étapes déjà effectuées, et peuvent revenir rapidement à leur séquence d'actions; ils n'ont pas à reparcourir des successions de pages de tâches pour se remémorer les étapes déjà effectuées.

De plus, le procédé supportera le nouveau mode de dialogue "DATALINK" selon lequel des informations sont transmises entre le sol et le bord par voie hertzienne : des informations envoyées par le sol au système de gestion de vol pourront apparaître dans les étapes de la procédure, sous une forme particulière attirant l'attention du pilote. Le pilote vérifiera et acceptera ces informations de la même manière que s'il les avait introduites lui-même.

D'autres caractéristiques et avantages de l'invention apparaîtront à la lecture de la description détaillée qui suit et qui est faite en référence aux dessins annexés dans lesquels :

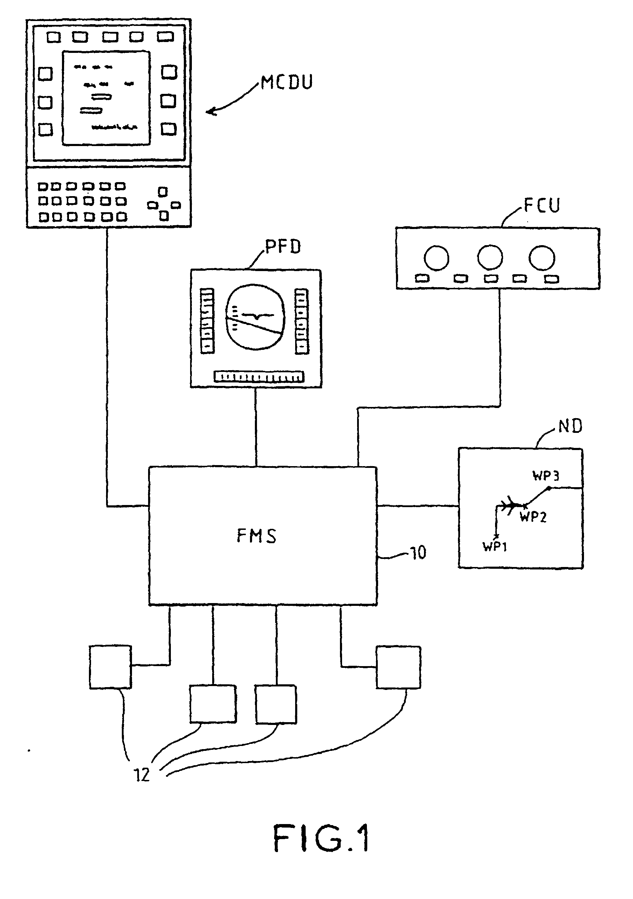

- la figure 1 représente l'ensemble du dispositif d'aide à la navigation selon l'invention;
- la figure 2 représente l'écran de la console au début d'une procédure de navigation;
- les figures 3 à 6 représentent l'écran à différentes étapes de la procédure;
- la figure 7 représente un organigramme de fonctionnement du système de gestion de vol pour les fonctions relatives à l'invention.

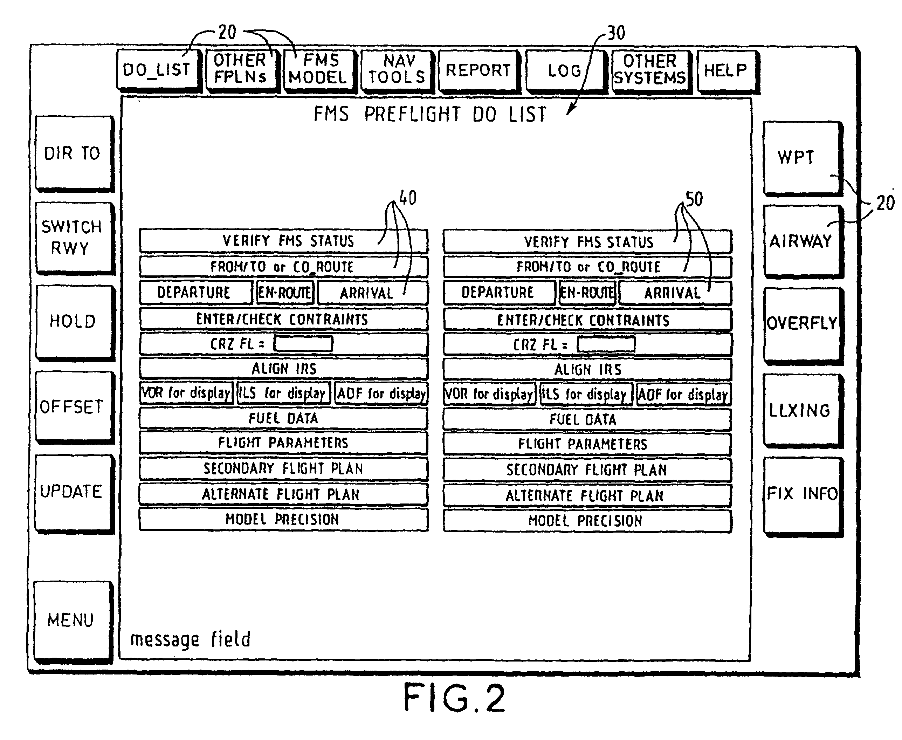

Les figures 2 à 6 comportent des indications écrites telles qu'elles peuvent apparaître dans la réalité sur un avion de ligne, et c'est pourquoi elles apparaissent sous forme de mots anglais ou d'abréviations tirées de l'anglais ou de codes mnémotechniques ressemblant à de l'anglais. Etant donné qu'elles n'ont pas de signification particulière relativement à la technique proposée par l'invention, il n'est pas utile de les donner sous une forme française qui serait moins compréhensible pour l'homme du métier. Toutefois, une traduction des mots anglais est donnée en fin de description.

Le dispositif d'aide à la navigation selon l'invention constitue une partie d'un système global de contrôle de l'avion. Ce système global comporte essentiellement :
- le système de gestion de vol, ou FMS ("Flight Management System"), qui est un calculateur 10 apte à recevoir des informations diverses, à élaborer d'autres informations, et à les communiquer au pilote par le moyen d'interfaces de dialogue;
- des capteurs 12 répartis dans l'avion, parmi lesquels par exemple des instruments de navigation (centrales inertielles IRS, etc.), des capteurs divers donnant des informations sur l'état de l'avion, éventuellement des instruments de communication avec l'extérieur, tous ces capteurs étant reliés au système de gestion de vol;
- les interfaces de dialogue avec le pilote, reliés au calculateur 10, parmi lesquels on peut trouver principalement :
   -- une boîte de commande de vol, dite FCU ("Flight Control Unit") permettant, à l'aide de boutons, de sélectionner par exemple le cap de l'avion, ou d'autres valeurs de consigne qu'il est nécessaire de fournir au système de gestion;
   -- un écran d'affichage d'informations de navigation, ND ("Navigation Display"), pour afficher des cartes, plans de vol, etc.,
   -- un écran d'affichage d'informations de pilotage, PFD ("Primary Flight Display"), pour afficher un horizon artificiel, des altitudes de l'avion, assiettes, vecteurs vitesse, une indication de mode de guidage ("Flight Mode Annunciator"), etc.,
   -- une console d'affichage et d'entrées de données, MCDU ("Multipurpose Control Display Unit"); cette console est l'instrument de dialogue principal pour ce qui concerne la présente invention, et elle fonctionne sous le contrôle direct de logiciels contenus dans le calculateur FMS. Bien entendu, la console elle-même peut comporter des logiciels propres nécessaires à son fonctionnement, dans le cas général où cette console comprend un microprocesseur et des circuits commandés par ce microprocesseur. Par exemple, les routines d'affichage de tracés sur l'écran, les routines de gestion du clavier de saisie de données, etc. sont propres à la console et les logiciels correspondants peuvent être intégrés dans la console, alors que les informations à afficher sont en général issues de logiciels contenus dans le calculateur FMS.

Dans ce système global, les éléments nécessaires à la mise en oeuvre de la présente invention sont le calculateur FMS (puisque le dialogue à prévoir est un dialogue entre le pilote et le calculateur), et la console MCDU.

La console MDCU d'affichage et d'entrées de données comporte un clavier, un écran, des touches de fonction, et des moyens pour sélectionner des zones affichées sur l'écran et activer la zone sélectionnée pour déclencher des opérations qui sont en rapport avec ce qui est affiché. Ces moyens de sélection et d'activation sont l'analogue de la "souris" bien connue utilisée dans le domaine des microordinateurs, c'est-à-dire que ce sont des moyens qui permettent
- de déplacer un curseur (visible ou invisible) dans un menu affiché sur l'écran pour sélectionner une zone proposée par ce menu, zone qui passe par exemple en surbrillance lors du passage du curseur sur cette zone;
- et d'activer une zone sélectionnée (bouton de "cliquage" de la souris).

En aéronautique on n'utilise normalement pas de souris mais plutôt des touches de déplacement, ou bien on prévoit que l'écran est un écran tactile, la désignation d'une zone par le doigt établissant la sélection de cette zone; ou encore on peut utiliser une tablette tactile à côté de l'écran. Tous ces moyens de sélection de zones sur l'écran sont équivalents.

Les touches de fonction de la console peuvent être disposées tout autour de l'écran, mais on notera qu'elles pourraient même être affichées sur l'écran lui-même, par exemple sur la périphérie d'une région centrale de l'écran; dans ce cas, les touches de fonction sont activées exactement selon le principe indiqué ci-dessus par les moyens de sélection de zone : les touches affichées sur l'écran sont des zones sélectionnables particulières sur lesquelles on peut "cliquet". C'est ce cas particulier qui est représenté sur les figures, dans lesquelles on voit des touches de fonction périphériques autour d'une région centrale qu'on peut appeler "région d'affichage de messages". Le fait que les touches de fonction soient affichées sur l'écran permet de les reconfigurer plus facilement pour modifier les fonctions associées à ces touches selon les besoins.

On va maintenant décrire les fonctions d'aide à la navigation apportées par la présente invention. Ces fonctions sont réalisées en utilisant le calculateur FMS programmé de manière spécifique pour exécuter les différentes opérations d'affichage nécessaires.

Pour aider à la compréhension de l'invention, on va décrire un scénario réaliste de navigation au cours duquel le pilote (ou les deux pilotes qui sont respectivement le pilote en fonction PF et le pilote non en fonction PNF) utilise les moyens d'aide à la navigation proposés par l'invention.

L'exemple concret est un vol sans incident, depuis l'aéroport Paris-Charles de Gaulle (CDG) à l'aéroport de Francfort (FAR).
Le scénario comporte dans cet exemple 7 grandes phases :
- préparation du vol ("Preflight")
- roulage vers les pistes de décollage
- décollage
- montée
- croisière
- descente
- approche

A tout instant, le système de gestion de vol sait dans quelle phase on est, du fait que les opérations effectuées par le pilote sont constamment prises en compte par ce système et du fait que le comportement de l'avion est en permanence détecté par les capteurs connectés au système.

### 1. Préparation du vol

C'est la phase pendant laquelle le pilote définit son plan de vol et initialise tous les paramètres de l'avion (masse en particulier).
Parmi les touches de fonction de la console MCDU, on trouve une touche spécifique utilisée dans la présente invention, qui est la touche DO_LIST. Comme on l'a dit, cette touche peut être indifféremment une touche matérielle ou une touche logicielle affichée sur l'écran et pouvant être sélectionnée par les moyens de sélection de zone.

Lorsqu'on active la touche DO_LIST, le calculateur FMS affiche dans la région d'affichage de messages une image telle que celle qu'on voit sur la figure 2; sur cette image, les touches de fonction 20 telles que la touche DO_LIST restent d'ailleurs affichées, autour de la région centrale d'affichages de messages.

L'image affichée dans la région centrale de l'écran comporte principalement :
- un en-tête d'information 30,
- des zones principales 40 sélectionnables et activables,

Les zones principales contiennent chacune des informations relatives à des étapes de procédure à exécuter par le pilote dans la phase de préparation; lorsqu'elles sont sélectionnées par l'utilisateur elles peuvent passer en surbrillance (ou changer de couleur, etc.) pour que cette sélection soit visible.

Sur la figure 2, il y a deux colonnes identiques de zones principales : zones 40 dans la colonne de gauche et zones 50 dans la colonne de droite. Dans un premier temps on ne considérera que les zones 40 de la colonne de gauche.

D'une manière générale, lorsqu'une zone principale déterminée est activée après avoir été sélectionnée, elle déclenche l'affichage par le calculateur de messages et de demandes de données nécessaires à l'exécution de l'étape de procédure correspondant à cette zone.

Les zones principales se succèdent les unes au dessous des autres et/ou les unes à côté des autres dans un ordre qui correspond à l'ordre de la procédure à exécuter par le pilote.

Lorsque l'avion est au sol et dans la phase de préparation de vol, le calculateur FMS sait qu'on est dans cette phase, et c'est pourquoi l'enclenchement de la touche DO_LIST a affiché les messages visibles sur la figure 2. Si le calculateur avait détecté que l'avion était dans une autre phase, l'enclenchement de la touche DO_LIST aurait amené une autre série de zones principales, avec d'autres indications de procédure, l'activation de ces zones différentes déclenchant alors d'autres opérations que celles qui correspondent à la figure 2.

La liste d'étapes de procédure affichée à la figure 2 et correspondant à la phase de préparation de vol comporte :
- un en-tête qui rappelle que le menu affiché est une liste d'étapes de la procédure de préparation de vol à effectuer par le pilote
- une indication écrite sur la teneur de chaque étape, dans les différentes zones principales qui se succèdent de haut en bas et de droite à gauche.

Les spécialistes de ce métier reconnaîtront aisément la signification des indications portées sur l'écran, ces indications étant toujours en anglais dans l'aéronautique. Les indications données sont des indications réalistes, mais ce ne sont que des exemples étant entendu que d'autres indications pourraient être données pour les mêmes opérations et que d'autres opérations de procédure pourraient être décidées pour une phase de vol déterminée.

Sur la figure 2, sont listées les étapes de procédure suivantes :
- vérification d'état du système de gestion de vol
- indication du trajet
- données de départ (piste d'aéroport, etc.), de vol, d'arrivée.
- altitude de croisière
- recalage des centrales inertielles sur la longitude et la latitude de l'aéroport,
- affichage forcé de moyens de radionavigation choisis par les pilotes,
- données de combustible : masse et centrage
- paramètres de vol
- plan de vol secondaire
- plan de vol de dégagement
- affichage d'un modèle de précision.

Certaines étapes peuvent être obligatoires dans la procédure, et d'autres facultatives, par exemple ici les trois dernières sont facultatives. Les étapes facultatives peuvent être affichées sous une forme légèrement différente des autres (fond grisé pour les unes, noir pour les autres par exemple).

Si l'utilisateur sélectionne et active une zone principale déterminée, le calculateur affiche un nouvel écran, principalement constitué d'informations et de demandes d'informations.

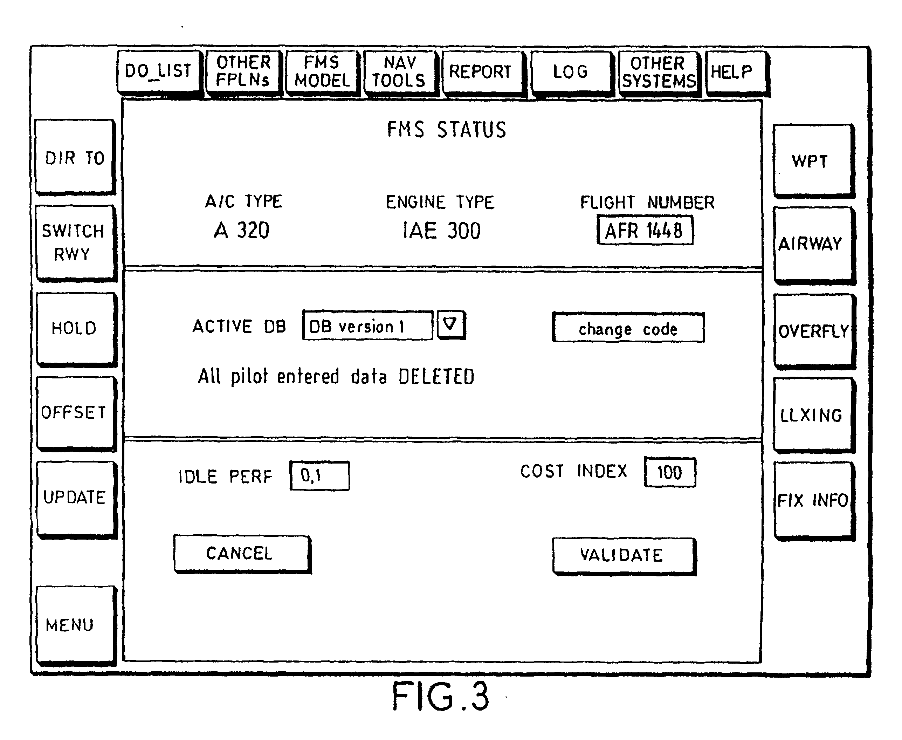

Ainsi, lorsque le pilote sélectionne et active la première zone principale, dans laquelle est affichée l'indication d'étape de procédure "Verify FMS status", il apparaît sur l'écran l'affichage représenté à la figure 3, comportant
- un en-tête ("FMS Status") rappelant qu'il s'agit de l'étape de vérification,
- des messages (principalement des informations et des demandes d'information),
- des zones réservées à la saisie des informations demandées,
- un bouton de validation "Validate", et de préférence aussi un bouton d'annulation "Cancel" pour le cas où le pilote voudrait revenir au menu sans exécuter l'étape de procédure en cours ou effacer les dernières données entrées.

Dans cet exemple, le calculateur FMS affiche sur l'écran le type d'avion et de moteur et demande des informations telles que le numéro du vol prévu. Ce numéro, ici "AFR1448", est saisi au clavier par le pilote après qu'il ait sélectionné la zone correspondant à cette saisie (ou que le calculateur se soit positionné automatiquement sur cette zone). Le pilote saisit de même les autres données demandées par cette page d'écran.

Lorsque les messages correspondant à cette étape de procédure ont ainsi été reçus par l'utilisateur et lorsque les données demandées ont été introduites au clavier, l'utilisateur valide l'opération (sélection et activation de la zone "validate"), ce qui signifie que, de son point de vue, l'étape de procédure a été exécutée.

La validation peut être effectuée par enfoncement d'un bouton de validation, ou sélection et cliquage sur une zone "OK", ou toute autre solution classique de validation : par exemple la saisie complète des données demandées par le calculateur dans la page d'écran considérée peut être interprétée par lui comme une action de validation pour cette page.

Les opérations à effectuer par l'utilisateur pour une étape de procédure déterminée peuvent impliquer le défilement successif de plusieurs pages d'écran, la validation définitive de l'exécution de l'étape de procédure étant alors effectuée sur la dernière page affichée sur la console par le calculateur FMS.

Lorsque la validation a été effectuée pour une zone principale déterminée, le calculateur affiche à nouveau la page d'écran visible à la figure 2, mais la zone principale qui correspond à l'étape de procédure maintenant validée apparaît dans une couleur différente des zones principales correspondant aux autres zones non encore validées.

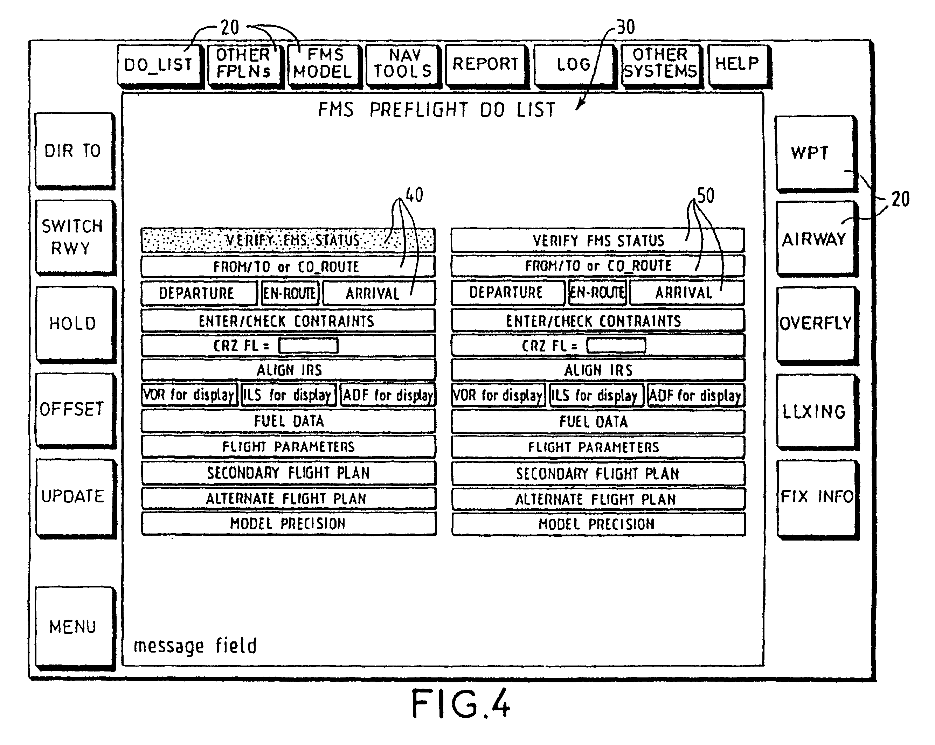

La figure 4 représente l'écran à ce stade. La couleur différente est symbolisée par une distribution de points.

Le pilote va ainsi effectuer les étapes de procédure successives proposées par l'écran "FMS Preflight DO_LIST", et les zones correspondant aux étapes validées apparaîtront dans la couleur correspondant à la validation.

La liste visible sur cet écran comporte donc à la fois, en couleurs différentes, les étapes de procédure déjà effectuées et les étapes de procédure qui restent à effectuer, ce qui permet au pilote d'avoir d'une manière très parlante une conscience exacte de la situation à un moment donné par rapport à ses obligations.

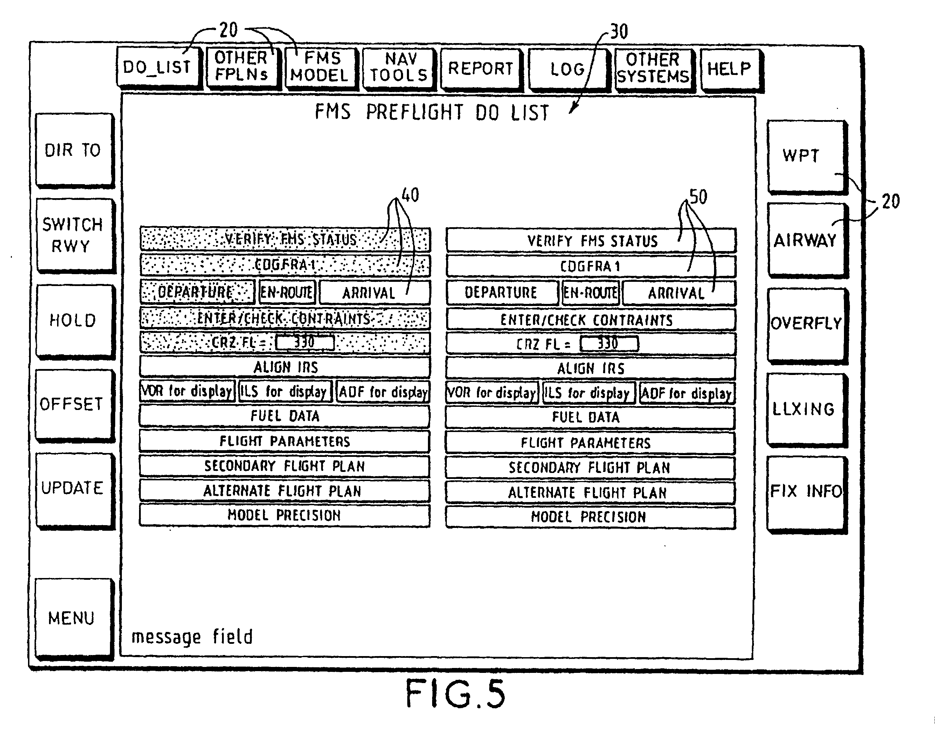

On remarquera que les indications portées dans les zones principales peuvent être modifiées après la validation de l'étape concernée : la figure 5 montre que la deuxième étape "PROM/TO or CO-ROUTE" (voir figure 2) a également été exécutée puisqu'elle est cochée, mais l'indication "CDGFRA1" est apparue dans la zone correspondante pour indiquer au pilote que le trajet entré au clavier est le trajet Charles de Gaulle/Francfort.

De même, une altitude de 33000 pieds (10000 mètres) est maintenant indiquée sous la forme "FL330" dans la zone principale CRZFL qui correspond à l'étape de choix d'altitude de vol en croisière. La zone auxiliaire correspondante, à gauche de la zone principale, est cochée.

Ainsi de suite, la procédure peut être exécutée complètement, y compris les étapes facultatives, et le pilote sait à tout moment où il en est de la procédure, même s'il est interrompu pendant l'exécution, ce qui arrive fréquemment dans la réalité.

### 2. autres phases du vol

On a donné des explications détaillées à propos des étapes de procédure de la phase de préparation de vol. Le même principe est utilisé pour les autres phases du vol s'il y a une liste d'étapes de procédure, ou une liste de contrôles à effectuer. En pratique c'est la phase de descente avant la phase d'approche qui nécessite une nouvelle série de vérifications et entrées de données.

Le pilote enclenche encore la touche DO_LIST, et le calculateur FMS, qui sait dans quelle phase de vol on est, affiche alors sur l'écran la liste d'opérations à effectuer, différente de celle de la figure 2, mais présentée de la même manière en zones principales correspondant aux étapes de procédure à effectuer dans cette phase.

Selon une autre possibilité très avantageuse de l'invention, on peut prévoir un perfectionnement du système selon l'invention dans les cas où l'avion est manoeuvré par une équipe de deux pilotes dont l'un est appelé pilote en fonction PF ou pilote volant (pour "Pilot Flying") et l'autre pilote non en fonction PNF ou pilote non volant (pour "Pilot Non Flying").

Les pilotes occupent chacun un siège équipé d'interfaces de dialogue, et ces interfaces sont identiques pour les deux pilotes et sont raccordées d'une manière similaire au calculateur FMS. Les deux consoles MCDU sont contrôlées indépendamment par les pilotes, le calculateur sachant distinguer les deux consoles aussi bien pour l'affichage que pour l'entrée de données.

On propose alors selon l'invention que les zones 40 de la colonne de gauche soient associées au pilote de gauche et les zones 50 de la colonne de droite soient associées au pilote de droite. Seul le pilote de gauche peut activer une zone 40, et seule le pilote de droite peut activer une zone 50. Et seule la zone activée et validée change de couleur. Il apparaît ainsi clairement sur l'écran non seulement quelles sont les étapes validées mais aussi quel pilote a effectué chacune d'elles. Et ceci apparaît de manière identique sur les consoles des deux pilotes. Il est courant en effet que l'un des pilotes demande à l'autre d'effectuer certaines opérations; il peut ainsi s'assurer à tout instant de ce qui a été fait sans avoir besoin de mémoriser intellectuellement à la fois ses propres actes et ceux de son collègue.

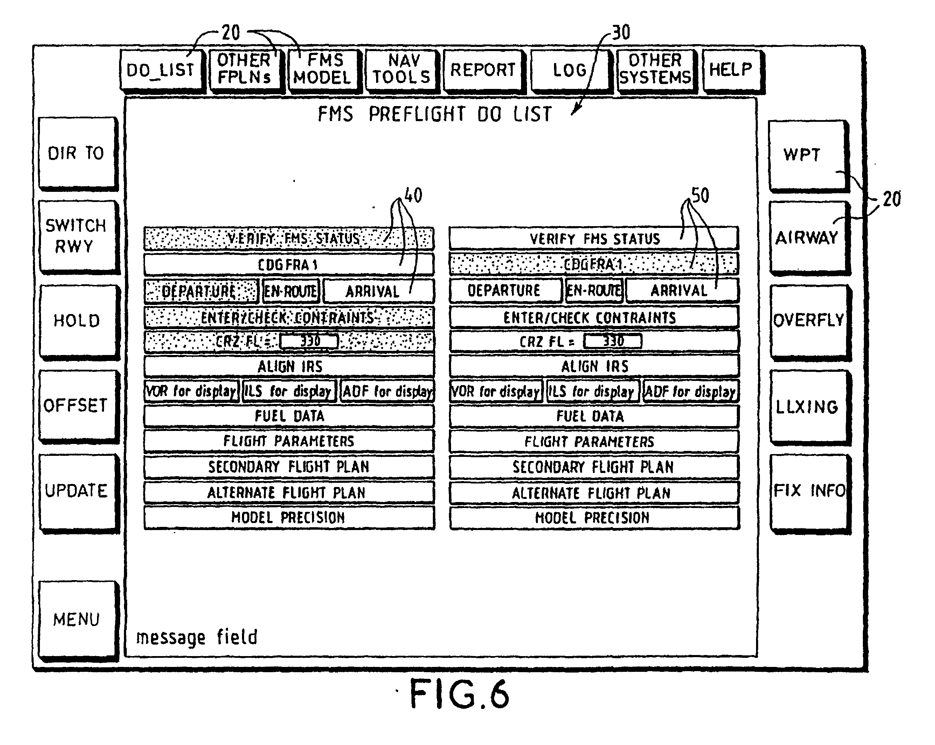

La figure 6 représente un exemple correspondant, dans lequel une des opérations a été effectuée par le pilote de droite. Les deux consoles affichent la même image.

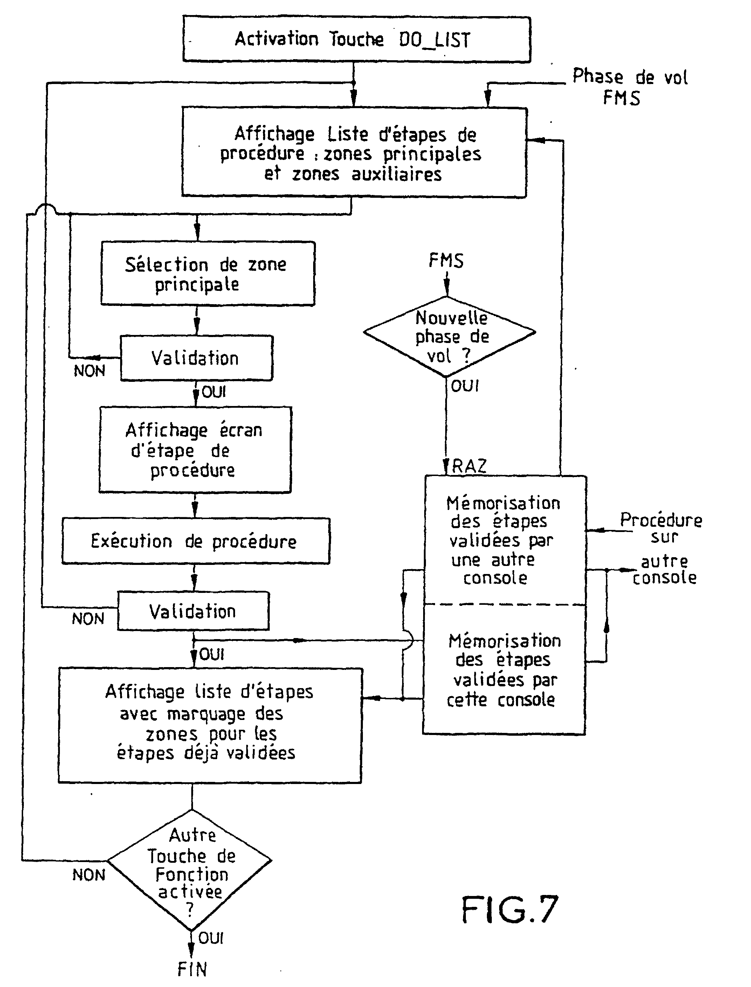

Bien entendu, l'invention est réalisée en programmant adéquatement le calculateur FMS, et l'organigramme général de fonctionnement de la partie logicielle correspondant à l'invention est rappelé sur la figure 7. On a montré sur cet organigramme, correspondant à l'affichage sur une des consoles :
- l'affichage du menu d'étapes de procédure lors de l'activation de touche de fonction "DO_LIST", l'affichage dépendant de la phase de vol dans laquelle on est; les zones principales sont affichées dans la couleur de validation seulement pour des étapes de procédure qui auraient déjà été effectuées, notamment par l'autre pilote sur l'autre console;
- la sélection et la validation d'une zone principale, avec l'affichage d'un nouvel écran correspondant;
- la validation après exécution d'une étape de procédure, et la mise en mémoire de cette information de validation, en vue de l'affichage ultérieur sur les deux consoles s'il y en a deux;
- le nouvel affichage de menu d'étapes avec couleur de validation pour les zones correspondant aux étapes déjà validées;
- la remise à zéro de la mémoire des validations si on change de phase de vol, étant donné que le menu de procédures affiché par l'activation de la touche DO_LIST dépend de la phase de vol; et l'affichage dans le nouveau menu des informations entrées au cours des phases précédentes et qui restent valables dans la nouvelle phase;
- la possibilité de continuer la procédure par sélection d'une nouvelle étape de procédure, ou la fin de la procédure si une autre touche de fonction est activée.

Dans la pratique, les deux phases essentielles pour lesquelles le menu DO_LIST sera utilisé seront la phase de préparation du vol et la phase d'approche. Le menu affiché au début de la procédure en phase d'approche comportera des zones non encore validées (effacement de la mémoire des validations) mais comportera par ailleurs des indications qui ont été entrées pendant la phase de préparation du vol (c'est-à-dire qu'il y a remise à zéro de la mémoire des validations mais il n'y a pas remise à zéro d'autres informations dont la validité subsiste).

Dans les figures décrites précédemment, on a considéré que pour chaque étape de procédure les deux zones gauche et droite correspondant aux deux consoles sont complètement séparées et comportent une indication dédoublée sur la procédure effectuée. Mais on peut prévoir aussi que les deux zones sont contiguës et forment un seul rectangle dans lequel est inscrite une indication unique. Dans ce cas la moitié du rectangle change de couleur selon la console à partir de laquelle l'étape de procédure a été validée. Le pilote désigne cette double zone en cliquant dans le rectangle sans avoir à se préoccuper de cliquer plutôt sur la partie droite ou plutôt sur la partie gauche. Les indications écrites de procédure peuvent être plus lisibles car on dispose d'un rectangle de dimension double.

| Traduction des mots anglais des figures 2 à 6 : | |
|---|---|
| do_list | liste de tâches |
| other | autres |
| model | modèle |
| tools | instruments |
| systems | systèmes |
| help | aide |
| preflight | avant le vol |
| verify | vérifier |
| from/to | de/à |
| switch | commutation |
| hold | maintien (hippodrome) |
| update | mise à jour |
| airway | route aérienne |
| overfly | survol |
| cancel | effacer |
| validate | valider |
| engine | moteur |
| number | numéro |
| departure | départ |
| arrivai | arrivée |
| enter/check | entrée/vérification |
| constraints | contraintes |
| align | aligner |
| for display | affichage |
| fuel | carburant |
| data | données |
| flight | vol |
| parameters | paramètres |
| secondary | secondaire |
| alternate | alternatif |
| field | champ |
| cost | coût |
| all pilot entered data DELETED : toutes les données entrées par le pilote effacées | |

## Revendications

1. Procédé d'aide à la navigation aérienne, utilisant un système de gestion de vol (FMS) couplé à au moins une console d'affichage et d'entrées de données (MCDU), la console permettant notamment de sélectionner des zones prédéterminées de l'écran pour exécuter des opérations correspondant respectivement aux différentes zones, ce procédé consiste à
- afficher simultanément sur l'écran de la console une série de zones principales (40) se succédant de haut en bas de l'écran, chaque zone correspondant à une étape d'une procédure de navigation,
- en cas de sélection par un utilisateur d'une zone principale correspondant à une étape de procédure déterminée, afficher sur la console des éléments d'information nécessaires à l'exécution de cette étape,
- en cas d'entrée dans la console d'une information de validation de l'étape de procédure correspondant à la zone principale sélectionnée, afficher à nouveau la série de zones principales, les zones principales pour lesquelles l'étape de procédure a été validée apparaissant au moins en partie en une couleur différente des zones principales pour lesquelles l'étape de procédure n'a pas été validée, **caractérisé en ce que**
le système de gestion de vol comporte en outre une deuxième console identique à la première, chaque zone principale (40) étant associée à une autre zone principale (50) correspondant à la même étape de procédure, l'une des zones (40) étant située à droite et l'autre (50) à gauche sur l'écran, et une validation de procédure effectuée à partir du poste de pilotage de gauche faisant apparaître dans une couleur différente la zone de gauche, sur les deux consoles, alors qu'une validation effectuée à partir du poste de pilotage de droite fait apparaître dans une couleur différente, sur les deux consoles, la zone de droite (50).

2. Dispositif d'aide à la navigation aérienne utilisant un système de gestion de vol (FMS) qui dialogue avec le pilote par le moyen de plusieurs interfaces parmi lesquelles au moins une console d'affichage et d'entrée de données (MCDU), ce dispositif comporte des moyens pour afficher simultanément sur l'écran de la console une série de zones principales (40) se succédant de haut en bas de l'écran, chaque zone correspondant à une étape d'une procédure de navigation, des moyens actionnables par l'utilisateur pour sélectionner une zone principale déterminée, des moyens pour présenter sur la console, lorsqu'une zone principale est sélectionnée, un affichage nécessaire pour exécuter l'étape de procédure correspondant à cette zone principale, des moyens pour entrer dans la console une information de validation de l'étape de procédure et pour afficher alors à nouveau la série de zones principales, les zones principales pour lesquelles l'étape de procédure a été validée apparaissant au moins partiellement en une couleur différente des zones principales pour lesquelles l'étape de procédure n'a pas été validée, **caractérisé en ce que**
le système de gestion de vol comporte en outre une deuxième console identique à la première, chaque zone principale (40) étant associée à une autre zone principale (50) correspondant à la même étape de procédure, l'une des zones principales étant située à gauche de l'écran et l'autre à droite, la zone située à gauche étant activable seulement à partir de la première console et la zone située à droite étant activable seulement à partir de la deuxième console, et des moyens étant prévus pour qu'une information de validation entrée par la première console lors de l'exécution de l'étape de procédure entraîne l'affichage de la zone de gauche en couleur différente, aussi bien sur la première console que sur la deuxième, et réciproquement qu'une information de validation entrée par la deuxième console entraîne l'affichage de la zone de droite en couleur différente aussi bien sur la première console que sur la deuxième console.

## Patentansprüche

1. Verfahren zur Unterstützung der Flugnavigation, das ein Flugleitsystem (FMS) verwendet, das mit wenigstens einer Anzeige- und Dateneingabeeingabekonsole (MCDU) gekoppelt ist, wobei die Konsole insbesondere die Auswahl vorgegebener Zonen des Bildschirms ermöglicht, um den jeweiligen verschiedenen Zonen entsprechende Operationen auszuführen, wobei dieses Verfahren darin besteht:
- auf dem Bildschirm der Konsole gleichzeitig eine Reihe von Hauptzonen (40) anzuzeigen, die auf dem Bildschirm von oben nach unten aufeinanderfolgen, wobei jede Zone einem Schritt einer Navigationsprozedur entspricht,
- auf der Konsole dann, wenn der Benutzer eine einem bestimmten Prozedurschritt entsprechende Hauptzone auswählt, Informationselemente anzuzeigen, die für die Ausführung dieses Schrittes notwendig sind,
- die Reihe von Hauptzonen dann, wenn Informationen für die Validierung des der gewählten Hauptzone entsprechenden Prozedurschrittes in die Konsole eingegeben werden, erneut anzuzeigen, wobei die Hauptzonen, für die der Prozedurschritt validiert worden ist, wenigstens teilweise in einer Farbe erscheinen, die von jener der Hauptzonen, für die der Prozedurschritt nicht validiert worden ist, verschieden ist, **dadurch gekennzeichnet, daß**
das Flugleitsystem außerdem eine zweite Konsole umfaßt, die mit der ersten übereinstimmt, wobei jeder Hauptzone (40) eine andere Hauptzone (50) zugeordnet ist, die demselben Prozedurschritt entspricht, wobei sich eine der Zonen (40) rechts auf dem Bildschirm und die andere (50) links auf dem Bildschirm befindet und eine Prozedurvalidierung, die von einem linken Steuergerät aus erfolgt, die linke Zone auf den beiden Konsolen in einer unterschiedlichen Farbe erscheinen läßt, während eine Validierung, die von einem rechten Steuergerät aus erfolgt, die rechte Zone (50) auf beiden Konsolen in einer unterschiedlichen Farbe erscheinen läßt.

2. Vorrichtung zur Unterstützung der Flugnavigation, die ein Flugleitsystem (FMS) verwendet, das mit dem Piloten mittels mehrerer Schnittstellen, unter denen sich wenigstens eine Anzeige- und Dateneingabekonsole (MCDU) befindet, einen Dialog führt, wobei diese Vorrichtung umfaßt: Mittel, die auf dem Bildschirm der Konsole gleichzeitig eine Reihe von Hauptzonen (40) anzeigen, die auf dem Bildschirm von oben nach unten aufeinanderfolgen, wobei jede Zone einem Schritt einer Navigationsprozedur entspricht, Mittel, die durch den Benutzer betätigt werden können, um eine bestimmte Hauptzone auszuwählen, Mittel, die auf der Konsole dann, wenn eine Hauptzone ausgewählt worden ist, eine Anzeige darstellen, die für die Ausführung des dieser Hauptzone entsprechenden Prozedurschrittes notwendig ist, Mittel für die Eingabe von Informationen für die Validierung des Prozedurschrittes in die Konsole und für die erneute Anzeige der Reihe von Hauptzonen, wobei die Hauptzonen, für die der Prozedurschritt validiert worden ist, wenigstens teilweise in einer Farbe erscheinen, die von jener der Hauptzonen, für die der Prozedurschritt nicht validiert worden ist, verschieden ist, **dadurch gekennzeichnet, daß** das Flugleitsystem außerdem eine zweite Konsole umfaßt, die mit der ersten übereinstimmt, wobei jeder Hauptzone (40) eine andere Hauptzone (50) zugeordnet ist, die demselben Prozedurschritt entspricht, wobei sich eine der Hauptzonen auf dem Bildschirm links und die andere darauf rechts befindet, wobei die links befindliche Zone nur von der ersten Konsole aus aktivierbar ist und die rechts befindliche Zone nur von der zweiten Konsole aus aktivierbar ist, und Mittel vorgesehen sind, damit Validierungsinformationen, die von der ersten Konsole bei der Ausführung des Prozedurschrittes eingegeben werden, eine Anzeige der linken Zone auf der ersten Konsole bzw. auf der zweiten Konsole in unterschiedlicher Farbe zur Folge haben und umgekehrt Validierungsinformationen, die von der zweiten Konsole eingegeben werden, eine Anzeige der rechten Zone auf der linken Konsole bzw. auf der rechten Konsole in unterschiedlicher Farbe zur Folge haben.

## Claims

1. Process for aiding aerial navigation, using a flight management system (FMS) coupled to at least one data display and input console (MCDU), the console making it possible in particular to select predetermined zones of the screen so as to execute operations respectively corresponding to the various zones, this process consists in
- simultaneously displaying on the screen of the console a series of main zones (40) which follow one another from the top to the bottom of the screen, each zone corresponding to a step of a navigation procedure,
- in the event that a user selects a main zone corresponding to a specified procedural step, displaying on the console elements of information necessary for executing this step,
- in the event that an item for validating the procedural step corresponding to the selected main zone is input into the console, once again displaying the series of main zones, the main zones for which the procedural step has been validated appearing at least in part in a different colour from the main zones for which the procedural step has not been validated, **characterized in that**,
the flight management system furthermore comprise a second console identical to the first, another main zone (50) corresponding to the same procedural step being associated with each main zone (40), one of the zones (40) being situated on the right and the other (50) on the left of the screen, and a procedural validation performed from the left-hand control panel causes the left-hand zone to appear in a different colour, on both consoles, whereas a validation performed from the right-hand control panel causes the right-hand zone (50) to appear in a different colour, on both consoles.

2. Device for aiding aerial navigation using a flight management system (FMS) which carries out a dialogue with the pilot by means of several interfaces which include at least one data display and input console (MCDU), this device comprises means for simultaneously displaying on the screen of the console a series of main zones (40) which follow one another from the top to the bottom of the screen, each zone corresponding to a step of a navigation procedure, user-actuatable means for selecting a specified main zone, means for exhibiting on the console, when a main zone is selected, a display necessary for executing the procedural step corresponding to this main zone, means for inputting into the console an item for validating the procedural step and for then once again displaying the series of main zones, the main zones for which the procedural step has been validated appearing at least partially in a different colour from the main zones for which the procedural step has not been validated, **characterized in that**,
the flight management system furthermore comprises a second console identical to the first, another main zone (50) corresponding to the same procedural step being associated with each main zone (40), one of the main zones being situated on the left of the screen and the other on the right, the zone situated on the left being activatable only from the first console and the zone situated on the right being activatable only from the second console, and means being provided such that a validation item input via the first console during the execution of the procedural step causes the displaying of the left-hand zone in a different colour, both on the first console and on the second, and conversely that a validation item input via the second console causes the displaying of the right-hand zone in a different colour, both on the first console and on the second console.
